# EUROPEAN PATENT APPLICATION

(11) **EP 4 198 799 A1**
(43) Date of publication of application: **21.06.2023**
(21) Application number: 21383166.2
(22) Date of filing: 20.12.2021
(51) Int. Cl.: G06F 30/15, B64C 3/10

(54) **IMPLIFIED METHOD FOR PARAMETRIC SURFACE GENERATION, FOR DESIGNING THE EXTERNAL GEOMETRY OF AN AIRCRAFT AIRFOIL.**

(71) Applicant: Airbus Operations, S.L.U., 28906 Getafe (Madrid) (ES)
(72) Inventor: LLAMAS SANDIN, Raúl Carlos, E-28906 Getafe, Madrid (ES); BAILEY NOVAL, Nicolás, E-28906 Getafe, Madrid (ES)
(74) Representative: ABG Intellectual Property Law, S.L.

(57) **Abstract**

The present disclosure belongs to the field of configuring the shape or geometry of an aircraft airfoil (1.1 - 1.7). In particular, the present invention provides a method to design the external geometry of an aircraft airfoil.

## Description

### TECHNICAL FIELD OF THE INVENTION

The present invention belongs to the field of configuring the shape or geometry of an aircraft airfoil. In particular, the present invention provides a method to design the external geometry of an aircraft airfoil.

### BACKGROUND OF THE INVENTION

The first step of designing an aircraft is usually related to define the external shape or geometry of the components that produce a lift force, for example airfoils such as wings, horizontal tail planes (HTPs), vertical tail planes (VTPs), etc.

Most of the methods for representing the geometry of a lifting surface or airfoil known from the state of the art are based on the definition of a quantified set of spanwise control sections, which define a set of parameters of the airfoil such as chord, twist, thickness, etc. Once these sections are defined, a mathematical interpolation scheme is used between them. Some of these methods further add spanwise curves in this interpolation step, which are used to guide the interpolation scheme for creating the "loft" or external aerodynamic surface of the airfoil.

These kind of methods require the parameterization of the surface of the airfoil to have as many complete control sections as de sum of the individual geometric features that are required to describe its complete spanwise. The more complex the airfoil's surface, the more parameters are needed to define it precisely, for example if the airfoil has a discontinuity in tangency in the trailing edge, a new control section must be added in order to define it. These strategy leads to vastly increment the dimensionality of the parameter space needed to define the lifting surface of practical industrial applications and, more specifically, the aircraft airfoil design.

Furthermore, the huge amount of parameters needed on these methods also leads to very "heavy" geometric CAD models that need huge storage and computing resources to be operated. These kind of models lack smoothness, as the interpolating function between stations not always guarantee continuity in curvature or even in tangency on the designed surfaces of the airfoil.

Therefore, the present invention proposes a new simplified method that overcomes the previously mentioned limitations by segregating each parameter into separate spanwise functions, each one defined independently of the others. This property allow the proposed method to define the key features by specifying only the relevant points spanwise, reducing remarkably the number of data required to define the airfoil's geometry and thus reducing the storage and computation resources needed to design and to operate these kind of surface geometry models.

### SUMMARY OF THE INVENTION

The present invention provides a solution for the aforementioned problems, by a method to design an external geometry of an aircraft airfoil according to claim 1.

In a first inventive aspect, the present invention provides a *method to design an external geometry of an aircraft lifting surface.* In particular, the present method is intended to design the external shape of any aircraft components that produce a lift force. These aircraft components are known as lifting surfaces and may be, among others, wings, horizontal tail plane (HTP) and vertical tail plane (VTP).

### The method comprises the steps of:

*(a) defining a geometric shape corresponding to an initial lifting surface according to a planform, wherein the initial lifting surface is defined by at least five geometry parameters and a plurality of shape modifier parameters of said lifting surface;*

The present method starts with the step (a) defining an initial lifting surface by means of a geometric shape that represents a planform of such initial lifting surface. Specifically, this geometric shape that is defined is preferably a quadrilateral. Any lifting surface, which is taken as a reference to define the respective geometric shape at this step (a) as well as those obtained by this method, is defined by at least five geometry parameters and a plurality of shape modifier parameters of this lifting surface. That is, the lifting surface geometry is supported by a quadrilateral determined by the geometry parameters. In a particular embodiment, *the at least five geometry parameters comprise at least one of a span, a root chord, a tip chord, a sweep angle at* 25% *and a dihedral angle.*

In a particular embodiment, *the plurality of shape modifier parameters comprise at least a leading edge.* The leading edge is the leading edge of a lifting surface, or in other words, the part of the lifting surface that first comes into contact with the air flow. In another particular embodiment, *the plurality of shape modifier parameters comprises at least a trailing edge.* The trailing edge or the rear edge of a lifting surface is the point in the profile of a lifting surface where the air from the upper and lower surface converge and leave contact with the lifting surface. In another particular embodiment, *the plurality of shape modifier parameters comprises at least a sweep angle.* The sweep angle is the inclination of the lifting surface with the longitudinal axis of the aircraft fuselage. The sweep angle is normally measured by drawing a line from root to tip of the lifting surface, typically 25% of the way back from the leading edge, and comparing that with the perpendicular to the longitudinal axis of the aircraft fuselage. In another particular embodiment, *the plurality of shape modifier parameters comprises at least a thickness.* In another particular embodiment, *the plurality of shape modifier parameters comprises at least a twist.* The wing twist is an aerodynamic feature added to aircraft lifting surface to adjust lift distribution along the lifting surface. *The twist corresponds to an inclination or curvature of the lifting surface along the chord between the leading edge and the trailing edge, at a given span position.*

In another particular embodiment, *the plurality of shape modifier parameters comprises at least a dihedral angle.* The dihedral is the angle that the span line of the lifting surface forms with the horizontal plane of the aircraft fuselage. The horizontal plane of the aircraft fuselage is defined by the longitudinal direction and the transversal direction of an aircraft or aircraft fuselage.

The lifting surface will be understood as being determined not only by the mentioned parameters (geometry parameters and shape modifier parameters) but also by a geometry shape of a planform that corresponds to a cross section of the lifting surface according to a horizontal plane of the aircraft; and by one or more airfoils which provides the thickness to the geometric shape along with the transition function between these airfoils.
*(b) modifying the geometric shape of the initial lifting surface applying a spanwise function to at least one shape modifier parameter of the initial lifting surface to obtain a modified lifting surface;*

Once the geometric shape of an initial lifting surface is defined, then the method modifies such geometric shape by functions along the span of the lifting surface. Particularly, a spanwise function is applied to at least one shape modifier parameter in order to transform the geometric shape defined in step (a) into a geometric shape corresponding to a planform of a modified lifting surface. That is, the geometric shape of the initial lifting surface is transformed into the geometric shape of a modified lifting surface. This modification in the geometric shape is achieved by applying the spanwise function to a shape modifier parameter, and the application of said function causes the geometry parameters to be changed relative to the span independently from each other. The function changes the shape of the geometry parameters independently without impacting the other geometry parameters. Therefore, by modifying the geometry parameters of the initial lifting surface, a new lifting surface (modified lifting surface) is obtained.

Each of the spanwise functions define continuously varying shape parameters of the planform of a lifting surface, in particular the shape modifier parameters. Each of these functions is defined with the minimum number of parameters that are required to describe the intended geometric feature.
*(c) defining the thickness of at least one airfoil at given span position along the span of the modified lifting surface obtained in step (b) based on at least one predefined airfoil; and*

Once the geometric shape of the modified lifting surface is obtained, the thickness of the lifting surface at least one position along the span for this modified lifting surface is defined in this step (c). Specifically, the thickness defined is based on the shape - and therefore thickness - of at least one predefined airfoil. The provision of the thickness of at least one airfoil at a given span position has no influence on the geometry parameters and the shape modifier parameters of the lifting surface.
*(d) defining the external geometry of the aircraft lifting surface by interpolating the at least one airfoil along the span of the modified lifting surface by means of a transition function.*

By last, once the desired geometric shape that corresponds to the modified lifting surface is obtained as well as the thickness of at least one airfoil along the span of such modified lifting surface, the method interpolates this airfoil along the span of the modified lifting surface by a transition function. Said transition function defines the interpolation of the points forming the predefined airfoil shape along the span direction in order to obtain the three-dimensional external geometry of the desired aircraft lifting surface.

Compared to the prior art, if a specific form is required in relation to a specific parameter (for example in the leading edge) of a lifting surface, the present method only needs to modify the spanwise function applied to the related parameter (in the example to the leading edge), while the prior art solution required it to be modified by all parameters and their corresponding functions. That is, since these parameters are now defined as independent spanwise functions, each parameter can be modified independent to each other. Therefore, the lifting surface is reconstructed with the value of these functions.

The object of the present method is to represent the external geometry of any practical lifting surface of an aircraft with the minimum number of parameters required and guaranteeing the desired continuity of the lifting surface in the spanwise direction. The essence of the invention is to link parameters that define the shape of a lifting surface planform independently and through spanwise functions.

Advantageously, the present method minimizes the amount of data required to describe the external geometry of an aircraft lifting surface to the strict minimum needed. In addition, the present method can be scaled in complexity and is deemed as agile in terms of mathematical complexity, memory requirements and size of the instantiated CAD model.

The present method provides the advantage that it does not require generation of multiple patches in a computer-aided three-dimensional interactive application for changing, for example, a base wing shape. The changes are made by the present method and the model can then be exported as one patch (one surface element) in the mentioned application; and the memory required is thereby minimized.

In a particular embodiment, *the geometric shape defined in step (a) is a trapezoid shape.*

Advantageously, the trapezoid shape is a basic geometric shape that helps to define all the relevant geometric parameters of the planform of a lifting surface with the least number of variables, that is to say, with five parameters. With this approach, the subsequent geometries, derived from the basic trapezoidal planform by perturbation functions, are driven by the basic five parameters representing said trapezoid. This has the advantage of automatically maintaining the design intent of the aerodynamic surface when major changes in the planform are performed, like changes in sweep angle, aspect or taper ratio and area.

In a particular embodiment, *the step (b) comprises modifying the geometric shape of the initial lifting surface applying a spanwise function to a plurality of shape modifier parameters.*

In a particular embodiment, *the spanwise function applied in step (b) is a function with a single input variable representing the span non-dimensional position in an interval [0,1].*

Advantageously, the domain of the spanwise function is normalized to an interval [0,1], which enables the blending and addition of functions, therefore creating a vector space suitable for numerical optimization.

Each of the shape modifier parameters is controlled by a single function with a single input variable representing the span non-dimensional position.

In a particular embodiment, *the spanwise function is a mathematical model, such as polynomials, Nurbs, Nurbs-fit, splines, or any other real single-valued function defined over an interval [0, 1], the mathematical model being configured to be controlled by control points and parameters depending on each of them.*

Advantageously, the lack of explicit requirements on continuity of the function enables the representation of unconventional geometries of interest for the aerodynamic design of lifting surfaces.

In a particular embodiment, *the transition function applied in step (d) is a mathematical function of the family of real single-valued functions.* The family of real single-valued functions belongs to a family defined by a mathematical model depending on the control points and additional parameters. In the most general case, said function can be discontinuous in order to represent discrete jumps in the value of the parameters, for example to represent a discrete change in planform chord or dihedral. The mathematical equations representing the function are chosen to reduce to a minimum the number of parameters required to represent the design intent. For example, polynomial functions can be used in simple cases, where the control parameters correspond to points of passage of the polynomials and possibly additional constraints like local derivatives or second derivatives. Other the families of possible functions can be Bezier curves, NURBS curves, polylines, B-splines and any other analytical representation of a single-valued curve, chosen with the intent of reducing the number of parameters required to represent the design features of interest.

### DESCRIPTION OF THE DRAWINGS

These and other characteristics and advantages of the invention will become clearly understood in view of the detailed description of the invention which becomes apparent from a preferred embodiment of the invention, given just as an example and not being limited thereto, with reference to the drawings.
- Figure 1A: This figure shows a first trapezoidal planform according to an embodiment of the present invention.
- Figure 1B: This figure shows a perspective view of two lifting surfaces each one corresponding to the trapezoidal planform of Figure 1A.
- Figure 2A: This figure shows a first spanwise function according to an embodiment of the present invention.
- Figure 2B: This figure shows a lifting surface planform modified applying the spanwise function of Figure 2A.
- Figure 2C: This figure shows a perspective view of two lifting surfaces each one corresponding to the lifting surface planform of Figure 2B.
- Figure 3A: This figure shows a second spanwise function according to an embodiment of the present invention.
- Figure 3B: This figure shows a lifting surface planform modified applying the spanwise function of Figure 3A.
- Figure 3C: This figure shows a perspective view of two lifting surfaces each one corresponding to the lifting surface planform of Figure 3B.
- Figure 4A: This figure shows a third spanwise function according to an embodiment of the present invention.
- Figure 4B: This figures shows a lifting surface planform modified applying the spanwise function of Figure 4A.
- Figure 4C: This figures shows a perspective view of two lifting surfaces each one corresponding to the lifting surface planform of Figure 4B.
- Figure 5A: This figure shows a fourth spanwise function according to an embodiment of the present invention.
- Figure 5B: This figures shows a lifting surface planform modified applying the spanwise function of Figure 5A.
- Figure 5C: This figures shows a perspective view of two lifting surfaces each one corresponding to the lifting surface planform of Figure 4B.
- Figure 6A: This figure shows a fifth spanwise function according to an embodiment of the present invention.
- Figure 6B: This figure shows a lifting surface planform modified applying the spanwise function of Figure 6A.
- Figure 6C: This figure shows a perspective view of two lifting surfaces each one corresponding to the lifting surface planform of Figure 6B.

### DETAILED DESCRIPTION OF THE INVENTION

The present invention provides a method to design an external geometry of an aircraft lifting surface by defining a plurality of geometry parameters, a plurality of shape modifier parameters and spanwise functions to modify the shape of an initial lifting surface to reach a desired final external geometry.

The method to design an external geometry of an aircraft lifting surface comprises the following steps:
(a) defining the geometric shape corresponding to an initial lifting surface according to a planform, wherein the initial lifting surface is defined by at least five geometry parameters and a plurality of shape modifier parameters of said lifting surface;
(b) modifying the geometric shape of the initial lifting surface applying a spanwise function to at least one shape modifier parameter of the initial lifting surface to obtain a modified lifting surface;
(c) defining the thickness of at least one airfoil at given span position along the span of the modified lifting surface obtained in step (b) based on at least one predefined airfoil; and
(d) defining the external geometry of the aircraft lifting surface by interpolating the at least one airfoil along the span of the modified lifting surface by means of a transition function.

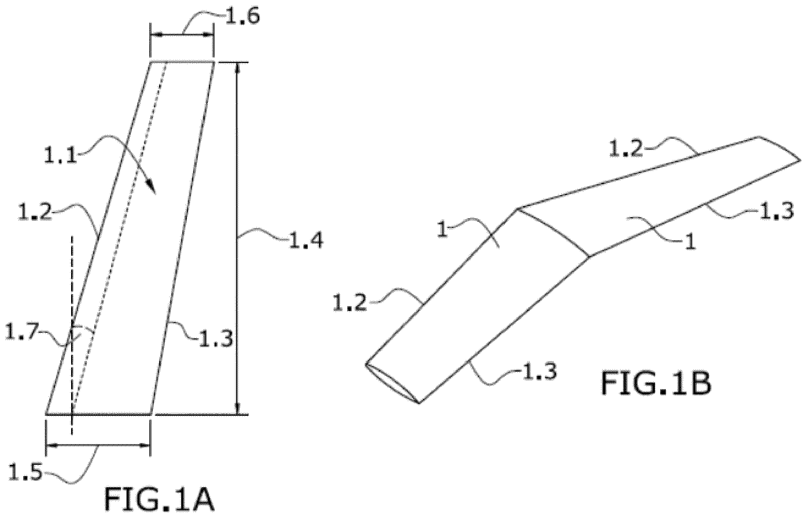

Figures 1A to 6C depict the steps of an example of the present method starting from an initial lifting surface and applying different spanwise functions to design the external geometry of a final lifting surface. The method starts from a trapezoidal planform defined in step (a) that is modified by several spanwise functions that are applied to its corresponding shape modifier parameters independently in several iterations of step (b). Finally steps (c) and (d) of the method are performed conforming the external geometry of the final aircraft lifting surface.

Figure 1A shows a first lifting surface (1) conformed following step (a) of the present method, which is based on an initial geometric shape according to a lifting surface planform (1.1) that is defined by means of at least five geometry parameters and a plurality of shape modifier parameters. In this particular example, the geometric shape of the first lifting surface (1) according to a planform (1.1) is a trapezoid shape, which is considered to be one of the most effective and efficient shapes to begin with, as it is easily associated with the shape of a basic lifting surface planform. In particular, figure 1B shows a perspective view of two first lifting surfaces (1) corresponding to the trapezoidal planform (1.1) shown on figure 1A. The two first lifting surfaces (1) are axial symmetry of each other along a central axis along which their root chords (1.5) are placed next to each other.

First, a trapezoidal planform (1.1) is defined by means of at least five geometry parameters such as span (1.4), root chord (1.5), tip chord (1.6), sweep angle (1.7) at 25% and dihedral angle (not represented as it represents an elevation of the tip chord with respect to the plane of the figure to which the root chord belongs); and a plurality of shape modifier parameters such as leading edge (1.2), trailing edge (1.3), sweep angle, absolute thickness or relative thickness (ratio of maximum section thickness to local chord), twist and dihedral angle.

One of the shape modifier parameters is thickness (absolute thickness or relative thickness). This means that the thickness of the planform, at one point along the chord (usually the point of maximum thickness of the airfoil), is defined all along the span; and a spanwise function may be applied to the thickness so as to modify the thickness of the planform along span. According to the present invention, the perturbation functions (or spanwise functions) that are applied on step b) normally operate on the relative thickness of the lifting surface; however, if the thickness is an input for the present method, then the airfoil section is scaled.

Another shape modifier parameter could be the chord position of the maximum thickness, expressed in values between [0, 1] on normalized chords, or as a percentage of the chord for each span position along the span. A spanwise function may also be applied to the chord position of the maximum thickness so as to modify the chord's maximum thickness position along the span.

In other embodiments, in relation with the step c), the thickness of the planform along the chord at one predefined position of the span is defined by the choice of a specific predefined airfoil. This may be for example a NACA airfoil. The specific predefined airfoil is selected from a catalog or specifically designed, and the chord point with maximum thickness is defined by the geometry of the profile unless the perturbation function that modifies it is applied. Then, the step d) of defining the external geometry is performed.

Once the geometry of the first lifting surface planform (1.1) is defined in step (a), the plurality of shape modifier parameters are set up. The shape modifiers will be used in the subsequent steps of the method to modify the external geometry of the lifting surface planform (1.1) and therefore to obtain the external geometry of the final lifting surface.

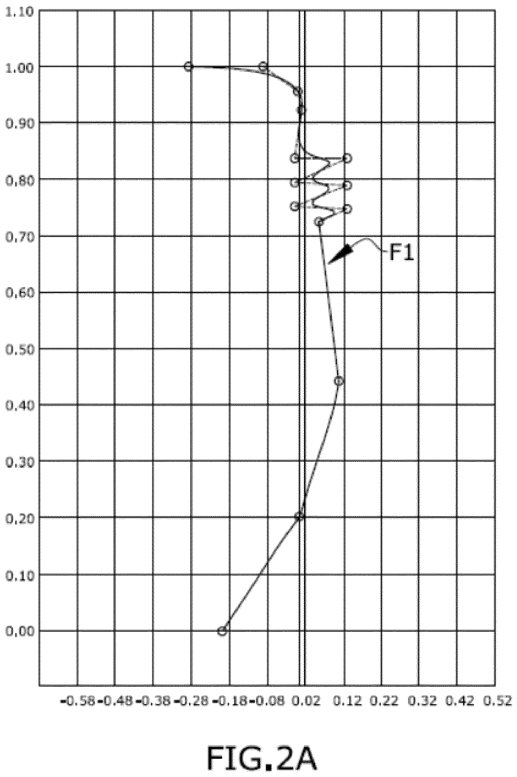

Figures 2A-2C depict a first iteration of step (b) of the method, wherein the geometry of the first lifting surface (1) is modified by means of a first spanwise function (F1) applied to a first shape modifier parameter. The function (F1) is an example of a single-valued function, in this case continuous, defined in the interval [0,1] by control points and continuity conditions.

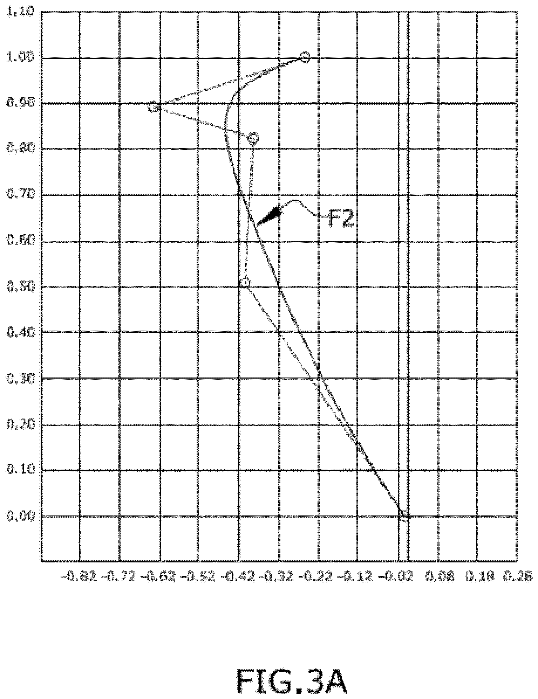

The value of the parameters corresponding to the control points are the non-dimensional spanwise location in [0,1] and the non-dimensional chordwise perturbation (real-valued), non-dimensionalized with the local chord at the corresponding spanwise location. Specifically, as it is shown on figure 2A (and in the subsequent figures 3A, 4A, 5A and 6A) the vertical axis (ordinate) corresponds to the interval [0,1] of the span from the root at y = 0 to the tip at y = 1; and the horizontal axis (abscissa) represents the local chord dimensionless with respect to the chord of the trapezoidal planform of the first lifting surface, wherein a negative value represents a point ahead of the leading edge of the first lifting surface and a value greater than 1 represents a point behind the trailing edge of the first lifting surface. For example, x = 0.5 corresponds to the midline of the trapezoidal planform at any point on the span; and x = 0.2 corresponds to the points at 20% of the local chord of the trapezoidal planform at any point of the span. If the sweep angle or the narrowing of the trapezoidal planform is changed, the geometry automatically adapts to the modification, which is, one of the main advantages of the invention, preserving the design intent against global disturbances of the trapezoidal planform geometry of the first lifting surface.

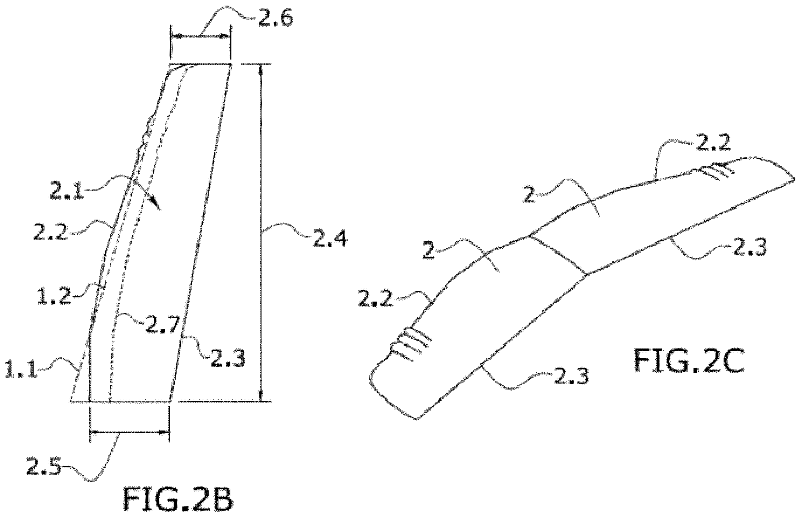

According to step (b), the trapezoidal planform (1.1) of the first lifting surface (1) is modified by means of applying said first spanwise function (F1) to the leading edge (1.2). That is, the first shape modifier parameter used to conform the external geometry of the final lifting surface (6) is the leading edge. The result of applying the first spanwise function (F1) to the leading edge (1.2) of the first lifting surface (1) can be observed on figure 2B. Particularly, figure 2B shows a planform (2.1) of a second lifting surface (2) with a second leading edge (2.2) as result of applying the first spanwise function (F1) to the leading edge (1.2) of the first lifting surface (1).

Figure 2B shows the second lifting surface planform (2.1) obtained in first iteration of step (b) wherein its geometry parameters (span (2.4), root chord (2.5), tip chord (2.6), sweep angle (2.7) at 25% and dihedral angle (not shown) compared to the first lifting surface planform (1.1) have been modified as consequence of applying the first spanwise function (F1) to the leading edge as shape modifier parameter.

A first spanwise function (F1) is defined, and then the function is applied to the shape modifier parameter. The result of applying the first spanwise function (F1) to the shape modifier parameter (leading edge) can be observed on the perspective view of the two second lifting surfaces present on figure 2C. In particular, figure 2C shows a perspective view of two second lifting surface (2) each one corresponding to the planform (2.1) shown on figure 2B. The two second lifting surfaces (2) are axial symmetry of each other along a central axis along which their root chords (2.5) are placed next to each other.

The value of the first perturbation function (F1) corresponds to a normalized variation of the local chord, i.e., actual shift of the leading or trailing edge divided by the local chord of the trapezoidal function. This is the effect of the perturbation functions at normalized values with the trapezoidal shape.

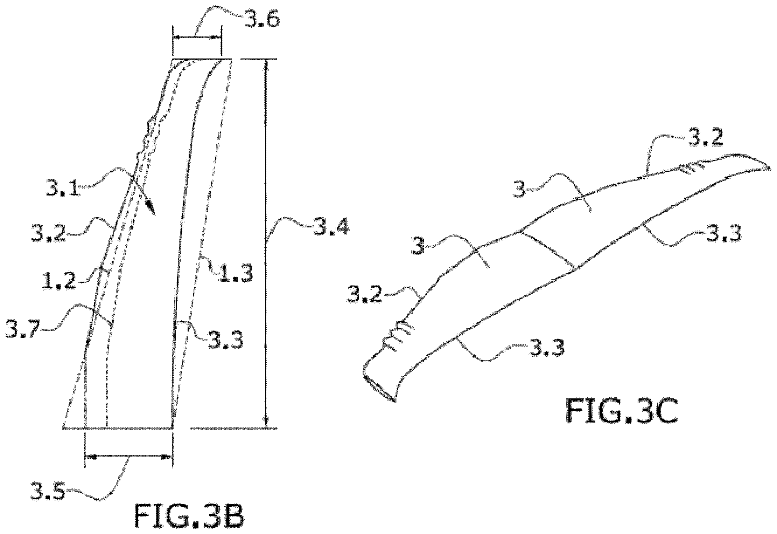

Figures 3A-3C show a second iteration of step (b) of the present method, wherein the geometry of the second lifting surface (2) is modified by means of a second spanwise function (F2), applied to a second shape modifier parameter. In this iteration of step (b) the planform (2.1) of the second lifting surface (2) is modified by applying said second spanwise function (F2) to the trailing edge (2.3), the second shape modifier parameter used to conform the external geometry of the final lifting surface (6). The result of applying the second spanwise function (F2) to the trailing edge (2.3) of the second lifting surface (2) can be observed in figure 3B. Particularly figure 3B shows a planform (3.1) of a third lifting surface (3) as a result of applying the second spanwise function (F2) to the trailing edge (2.3) of the second lifting surface (2).

Figure 3B shows the third lifting surface planform (3.1) obtained in second iteration of step (b) wherein its geometry parameters (span (3.4), root chord (3.5), tip chord (3.6), sweep angle (3.7) at 25% and dihedral angle (not shown) compared to the first lifting surface planform (shown on figure 1A) have been modified as consequence of applying the second spanwise function (F2) to the trailing edge as shape modifier parameter.

One may note that the application of a second spanwise function to a second geometry parameter is entirely independent of the application of the first spanwise function to the first geometry parameter. In particular, the application of the second spanwise function does not impact the leading edge shape as defined by the first spanwise function. Moreover, the first spanwise function may be modified again without any impact on the trailing edge. The spanwise functions are completely independent from each other.

The result of applying the second spanwise function (F2) to the shape modifier parameter (trailing edge) can be observed on the perspective view of the third lifting surface (3) present on figure 3C. In particular, figure 3C shows a perspective view of two third lifting surfaces (3) each one corresponding to the planform (3.1) shown on figure 3B. These two third lifting surfaces (3) are axial symmetry of each other along a central axis along which their root chords (3.5) are placed next to each other.

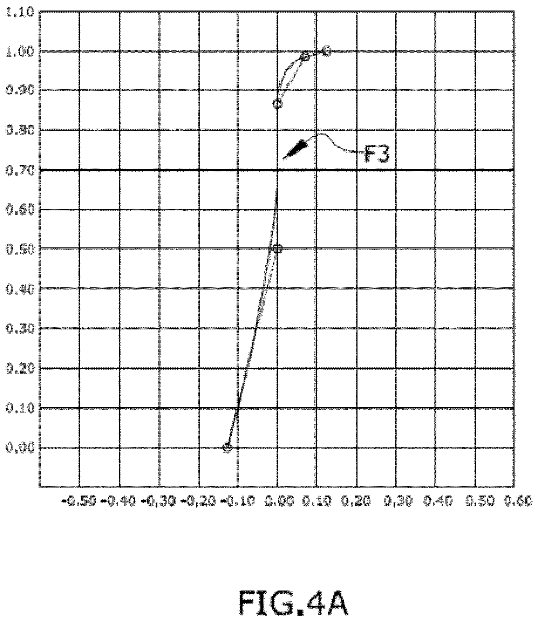

Figures 4A-4C depict a third iteration of step (b) of the present method, wherein the geometry of the third lifting surface (3) is modified by means of a third spanwise function (F3) applied to a third shape modifier parameter. According to step (b), the planform (3.1) of the third lifting surface (3) present on figure 3C is modified by means of applying said third spanwise function (F3) to the dihedral. On this iteration the dihedral, a third shape modifier parameter, is used to conform the external geometry of the final lifting surface (6).

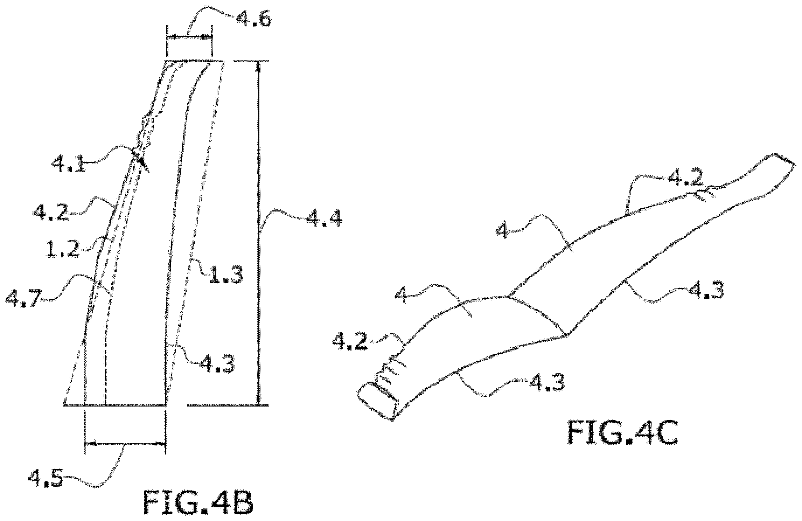

The result of applying the third spanwise function (F3) to the dihedral of the third lifting surface (3) can be observed on figure 4B that shows a planform (4.1) of a fourth lifting surface (4) as a result of applying the third spanwise function (F3) to the dihedral of the third lifting surface (3).

Figure 4B shows the fourth lifting surface planform (4.1) obtained in this third iteration of step (b) wherein its geometry parameters (span (4.4), root chord (4.5), tip chord (4.6) and sweep angle (4.7) at 25% and the dihedral angle (not shown) compared to the first lifting surface planform (shown on figure 1A) have been modified as consequence of applying the third spanwise function (F3) to the dihedral as shape modifier parameter.

The result of applying the third spanwise function (F3) to the third shape modifier parameter (dihedral) is presented on the perspective view of figure 4C. In particular, figure 4C shows a perspective view of two fourth lifting surfaces (4) each one corresponding to the planform (4.1) shown on figure 4B. The two fourth lifting surfaces (4) are axial symmetry of each other along a central axis along which their root chords (4.5) are placed next to each other.

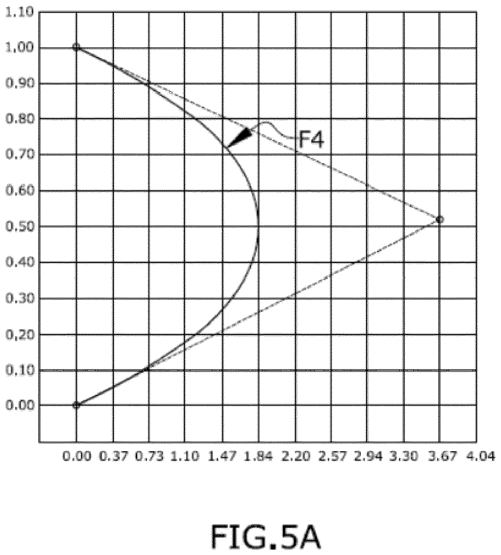

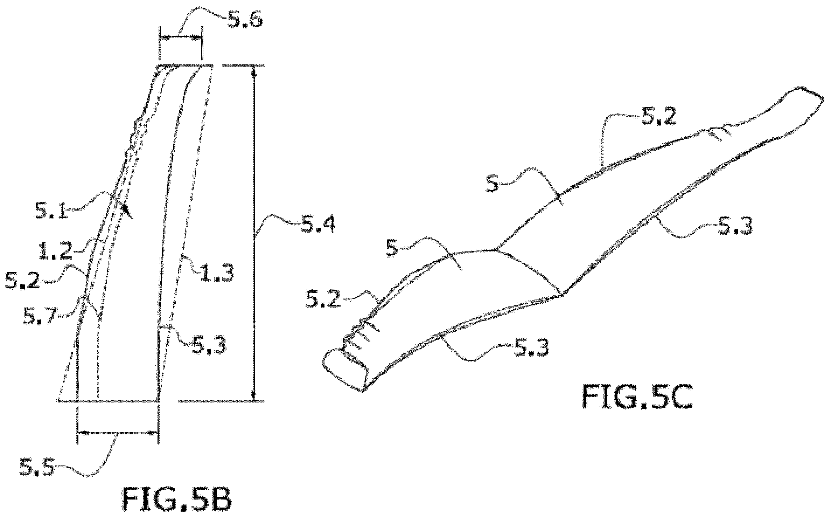

Figures 5A-5C show the fourth iteration of step (b) of the present method. In this last iteration of step (b) performed on this particular example, the fourth lifting surface (4) is modified by means of a fourth spanwise function (F4) applied to a fourth shape modifier parameter. According to step (b), the planform (4.1) of the fourth lifting surface (4) present on figure 4C is modified by means of applying said third spanwise function (F4) to the twist. On this iteration, the twist is used to conform the external geometry of the final lifting surface (6). The result of applying the fourth spanwise function (F4) to the twist is present on figure 5B that shows a planform (5.1) of a fifth lifting surface (5) as a result of applying the fourth spanwise function (F4) to the dihedral of the fourth lifting surface (4).

Figure 5B depicts the fifth lifting surface planform (5.1) obtained in the fourth iteration of step (b) wherein its geometry parameters (span (5.4), root chord (5.5), tip chord (5.6), sweep angle (5.7) at 25% and dihedral angle (not shown) compared to the first lifting surface planform (shown on figure 1A) have been modified as consequence of applying the fourth spanwise function (F4) to the twist as shape modifier parameter.

The result of applying the fourth spanwise function (F4) to the fourth shape modifier parameter (twist) is presented on the perspective view of figure 5C. In particular, figure 5C shows a perspective view of two fifth lifting surface (5) each one corresponding to the planform (5.1) shown on figure 5B. The two fifth lifting surfaces (5) are axial symmetry of each other along a central axis along which their root chords (5.5) are placed next to each other.

The mentioned spanwise functions (F1-F4) control the geometric shape of the lifting surface along the span, that is, changes the initial shape of a part of the planform acting on its corresponding shape modifier parameter. These changes on the shape are made independently, without causing any impact on other parts of the external geometry that are defined by other shape modifier parameters.

As already mentioned for figure 2B, in figures 3B, 4B and 5B the geometry parameters (span (3.4, 4.4, 5.4), root chord (3.5, 4.5, 5.5), tip chord (3.6, 4.6, 5.6), sweep angle (3.7, 4.7, 5.7) at 25% and dihedral angle (not shown)) have been modified as consequence of applying the corresponding spanwise function (F2, F3, F4) to the corresponding shape modifier parameter.

As can be seen on the transition between figures 2B-2C and 3B-3C, 3B-3C and 4B-4C, 4B-4C and 5B-5C, a different part of the external geometry of the planform is modified independently for each shape modifier parameter. Advantageously this feature allows the designer to modify different parts of the external geometry of the lifting surface based on the particular requirements of an aircraft, acting independently over each parameter without having to adjust the rest in every iteration.

After step (b) has been performed the required number of times to adjust the external geometry of the lifting surface according the aircraft requirements, a fifth lifting surface (5) is obtained. In this particular example, the method iterates four times step (b), applying four different spanwise functions (F1-F4) to four different shape modifier parameters (leading edge, trailing edge, dihedral and twist). As can be observed on the transition between figures 2A-5C, each spanwise function only affects the chosen shape modifier parameter, and hence the part of the external geometry of the lifting surface that is purposely going to be modified, eliminating the drawback of having to adjust the rest of the parameters in every iteration.

The spanwise functions applied on the above mentioned iterations of step (b), are functions with a single input variable representing the span non-dimensional position f(span) span [0,1]. In addition, these spanwise functions are mathematical model, such as polynomials, Nurbs, Nurbs-fit, splines, or any other real single-valued function defined over the interval [0,1]. The mathematical model being configured to be controlled by control points and parameters depending on each of them.

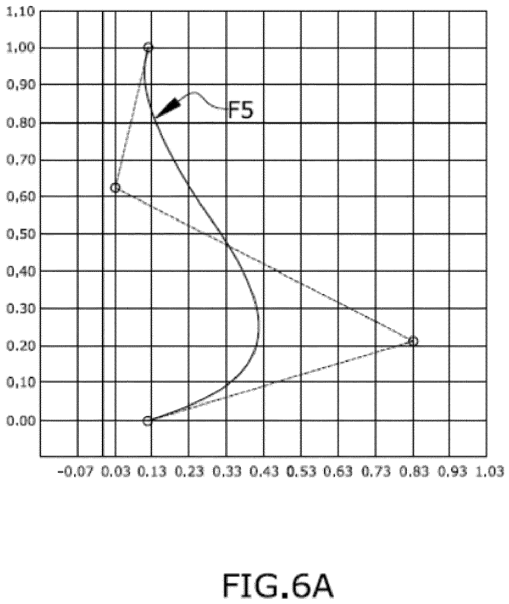

Figures 6A-6C depict the steps (c) and (d) of the present method.

Once the fifth lifting surface (5) is obtained after iterating step (b) as many times as is needed to obtain the desired design, a new spanwise function (F5) is defined to be applied on step (c). This function provides the thickness of at least one airfoil along the span of the fifth lifting surface (5) based on at least one predefined airfoil at a given span position. This particular spanwise function (F5) can be observed on figure 6A. The result of applying said spanwise function (F5) to the thickness parameter, defines the thickness of the final lifting surface (6) along its span.

Finally, on step (d), the external geometry of the final lifting surface (6) is created by interpolating the at least one airfoil along the span of the modified lifting surface (5) by means of a transition function that is a mathematical function.

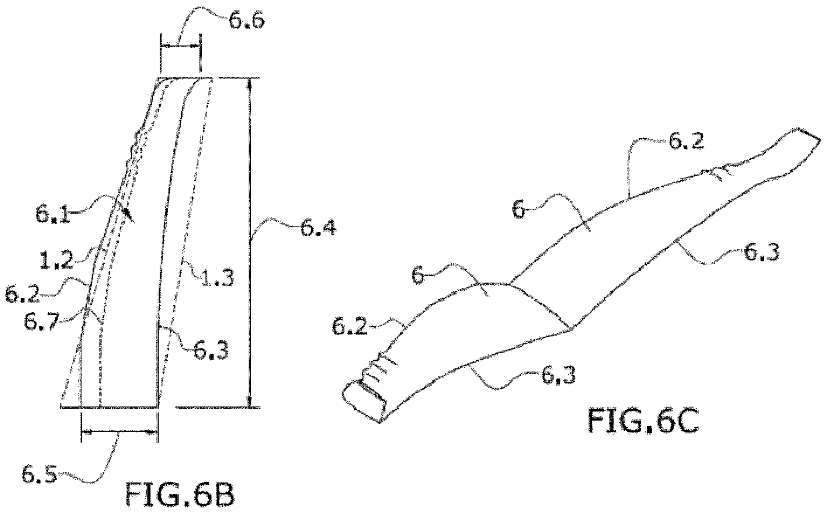

Figure 6B shows the final lifting surface planform (6.1) obtained after performing steps (c) and (d), wherein its geometry parameters (span (6.4), root chord (6.5), tip chord (6.6), sweep angle (6.7) at 25% and dihedral angle) compared to the first lifting surface planform (shown on figure 1A) have been modified as consequence of applying the last spanwise function (F5) to obtain the thickness of the final lifting surface (6).

The result of applying the last spanwise function (F5) to obtain the thickness of the final lifting surface (6) is presented on figure 6C. In particular, figure 6C shows a perspective view of two final lifting surfaces (6) each one corresponding to the planform (6.1) shown in figure 6B. Each final lifting surface (6) corresponds with the final design of the external geometry of an aircraft lifting surface obtained after completing the present method.

## Claims

1. Method to design an external geometry of an aircraft lifting surface, the method comprising the steps of:
(a) defining a geometric shape corresponding to an initial lifting surface (1) according to a planform (1.1), wherein the initial lifting surface (1) is defined by at least five geometry parameters and a plurality of shape modifier parameters of said lifting surface;
(b) modifying the geometric shape of the initial lifting surface (1) applying a spanwise function to at least one shape modifier parameter of the initial lifting surface (1) to obtain a modified lifting surface (2, 3, 4, 5);
(c) defining the thickness of at least one airfoil at a given span position along the span of the modified lifting surface (2, 3, 4, 5) obtained in step (b) based on at least one predefined airfoil; and
(d) defining the external geometry of the aircraft final lifting surface (6) by interpolating the at least one airfoil along the span of the modified lifting surface (2, 3, 4, 5) by means of a transition function.

2. Method according to claim 1, wherein the geometric shape defined in step (a) is a trapezoid shape.

3. Method according to any one of the previous claims, wherein the at least five geometry parameters comprise at least one of a span, a root chord, a tip chord, a sweep angle at 25% and a dihedral angle.

4. Method according to any one of previous claims, wherein the plurality of shape modifier parameters comprises at least a leading edge.

5. Method according to any one of previous claims, wherein the plurality of shape modifier parameters comprises at least a trailing edge.

6. Method according to any one of previous claims, wherein the plurality of shape modifier parameters comprises at least a sweep angle.

7. Method according to any one of previous claims, wherein the plurality of shape modifier parameters comprises at least a thickness.

8. Method according to any one of previous claims, wherein the plurality of shape modifier parameters comprises at least a twist.

9. Method according to any one of previous claims, wherein the plurality of shape modifier parameters comprises at least a dihedral angle.

10. Method according to any one of previous claims, wherein the step (b) comprises modifying the geometric shape of the initial lifting surface (1) applying a spanwise function to a plurality of shape modifier parameters.

11. Method according to any one of the previous claims, wherein the spanwise function applied in step (b) is a function with a single input variable representing the span non-dimensional position in an interval [0,1].

12. Method according to any one of previous claims, wherein the spanwise function is a mathematical model, such as polynomials, Nurbs, Nurbs-fit, splines, or any other real single-valued function defined over an interval [0,1], the mathematical model being configured to be controlled by control points and parameters depending on each of them.

13. Method according to any one of previous claims, wherein the transition function applied in step (d) is a mathematical function of the family of real single-valued functions.
